## Europäisches Patentamt
## European Patent Office
## Office européen des brevets

(19)

(11) Numéro de publication: **0 085 590**
**B1**

(12) **FASCICULE DE BREVET EUROPEEN**

(45) Date de publication du fascicule du brevet:
13.11.85

(21) Numéro de dépôt: **83400083.8**

(22) Date de dépôt: **13.01.83**

(51) Int. Cl.⁴: **F 02 M 31/16**

(54) Dispositif d'aspiration de fluides, notamment de combustibles liquides, disposé dans un réservoir.

(30) Priorité: **25.01.82 FR 8201114**

(43) Date de publication de la demande:
**10.08.83 Bulletin 83/32**

(45) Mention de la délivrance du brevet:
**13.11.85 Bulletin 85/46**

(84) Etats contractants désignés:
**BE DE FR GB IT NL SE**

(56) Documents cités:
**EP - A - 0 015 193
DE - A - 2 606 113
DE - A - 2 735 822
US - A - 3 768 454
US - A - 3 768 730**

(73) Titulaire: **Thibonnet, Bernard Raymond, 1, Allée de la Vigie, F-13260 Carry le Rouet (FR)**
Titulaire: **Staib, Philippe Henri, 34, Sukhumvit - Soi 42 Samanchan, Bangkok (TH)**
Titulaire: **Babet, Jean-Michel Christian, 5, rue de Tilsitt, F-75008 Paris (FR)**

(72) Inventeur: **Thibonnet, Bernard Raymond, 1, Allée de la Vigie, F-13260 Carry le Rouet (FR)**

(74) Mandataire: **Moulines, Pierre et al, Cabinet BEAU de LOMENIE 55, rue d'Amsterdam, F-75008 Paris (FR)**

BUNDESDRUCKEREI BERLIN

**Description**

La présente invention concerne un dispositif placé dans un réservoir et destiné à faciliter le pompage des combustibles liquides et notamment lorsque ceux-ci subissent en hiver des modifications de leurs caractéristiques physiques après une immobilisation prolongée au froid.

Ce dispositif permet également de réchauffer les fluides et de mettre en suspension les particules lourdes et l'eau qu'ils peuvent contenir.

Dans les procédés actuels, on utilise des tubes munis ou non de filtres plongeant directement dans la masse du liquide; or, ces procédés n'entraînent pas un réchauffage contrôlé du fluide ni un brassage de celui-ci. Il en resulte des difficultés importantes au niveau du pompage, notamment à cause du dépôt des particules lourdes au fond du réservoir, comme les précipitations de cristaux de paraffine, et l'accumulation de l'eau.

Il a été également proposé divers genres de réchauffeurs à circulation du combustible, mais tous font appel à des sources de chaleur extérieures entraînant des consommations importantes d'énergie. De plus, ces dispositifs connus présentent des inconvénients dont le plus grave réside dans l'incapacité de pomper des combustibles liquides froids dans les réservoirs, si ceux-ci ne sont pas intégralement chauffés.

De façon générale, il s'agit de matériels coûteux et relativement difficiles à adapter sur des réservoirs existants et qui ne peuvent pas satisfaire complètement les exigences nées de la dégradation des caractéristiques physico-chimiques des combustibles liquides.

A tel point que, dans de nombreux cas, les industriels utilisent des produits chimiques pour améliorer les conditions de pompabilité des combustibles liquides. Ces additifs, malgré l'efficacité dont ils font preuve, n'empêchent pas le dépôt des particules lourdes de paraffine fractionnées de s'amasser au fond du réservoir.

Il s'ensuit des perturbations imprtantes dans le cycle du pompage et dans le passage des filtres qui se trouvent alors colmatés.

Par le brevet USA 3 768 730 on connaît un dispositif d'aspiration de liquide, notamment de combustible liquide, disposé dans un réservoir, comprenant une enceinte présentant à sa base une première communication et à sa partie supérieure une deuxième communication avec le réservoir, ladite enceinte renfermant, d'une part, un conduit d'aspiration et, d'autre part, un conduit de retour de liquide excédentaire assurant le réchauffage de l'enceinte. Toutefois, comme il a été indiqué ci-dessus, l'enceinte débouche directement à sa base dans le fond du réservoir et cette disposition n'empêche pas le dépôt de particules lourdes dans le fond du réservoir et l'obstruction des conduits d'aspiration par lesdites particules.

Le dispositif suivant l'invention a pour but de remédier à ces inconvénients.

Conformément à la présente invention, l'enceinte repose sur le fond du réservoir, la première communication étant fournie par des lumières directionnelles verticales situées à la base de ladite enceinte, la deuxième communication avec le réservoir débouchant sous le niveau de liquide dans le réservoir et étant contrôlée par un flotteur actionné par le liquide dans l'intérieur de l'enceinte et le conduit d'aspiration comprenant une partie d'extrêmité qui est recourbée vers la partie haute de l'enceinte et comportant une série d'orifices répartis sur toute sa longueur.

Le dispositif suivant l'invention monté en crépine d'aspiration noyée dans le combustible liquide fonctionne en réchauffeur de masse, en régulateur de température, en anticristallisant de paraffine en brasseur émulsionneur, en dégazeur, en bac de tranquillisation. Il évite le désamorçage des pompes et permet de remonter l'eau et les sédiments contenus dans le combustible.

Le moyen de réchauffage est constitué d'un serpentin monté à l'intérieur de l'enceinte et percé de trous directionnels calibrés, destinés à créer un flux giratoire dans l'enceinte et permettant un brassage et un réchauffage du fluide.

La régulation de température montée sur l'appareil permet de maintenir une température constante à l'aspiration de la pompe alimentaire de l'installation thermique.

La cuvette permettant le passage de l'eau et des sédiments, ceux-ci sont extraits par la pompe alimentaire.

Le conduit d'aspiration à extrêmité recourbée est muni d'orifices qui permettent de pomper en priorité les parties supérieures de l'enceinte en cas de nécessité.

L'organe de mise en communication de l'enceinte et du réservoir est muni d'un flotteur intérieur qui assure en venant en contact sur son siège une étanchéité indispensable au bon fonctionnement de l'appareil.

Si le niveau du liquide vient à baisser dans l'einceinte, le déplacement du flotteur permet un remplissage par le haut de l'enceinte.

Les inconvénients mentionnés ci-dessus et qui sont liés à l'utilisation des combustibles liquides ont été contournés par des appareils montés soit sur les circuits des réservoirs, soit dans les filtres et fonctionnent à l'électricité à l'eau chaude ou à l'air chaud.

Le dispositif suivant l'invention permet de remplacer ces dispositifs connus en utilisant la totalité de l'énergie thermique contenue dans le flux du trop-plein du gavage des pompes alimentaires et de retour de fuites, retournant au réservoir. Le dispositif simple, peut coûteux, d'encombrement réduit est monté en crépine d'aspiration sur une canalisation raccordée à la pompe alimentaire. Il permet de pomper la quasi-totalité des combustibles actuels dans des conditions améliorées, de pompage, de régulation de température et d'économie d'énergie, n'utilisant aucune source d'énergie extérieure, telle que: eau chaud, air chaud, ou électricité.

D'autres caractéristiques et avantages de l'invention seront mieux compris à la lecture de la description qui va suivre de plusieurs modes de réalisation et en se référant aux dessins annexés, sur lesquels:

- la figure 1 est une vue en perspective d'un moteur à combustion interne et son réservoir de combustible dans lequel est disposé le dispositif d'aspiration de fluide suivant l'invention;
- la figure 2 est une vue en élévation et en coupe longitudinale du dispositif d'aspiration de fluide suivant l'invention;
- la figure 3 est une vue en coupe partielle du conduit d'aspiration;
- la figure 4 est une vue en coupe à grande échelle du régulateur;
- la figure 5 est une vue en perspective d'un mode de réalisation des lumières placées à la base de l'enceinte;
- la figure 6 est une vue en plan et en coupe de la partie inférieure de l'enceinte et des lumières;
- la figure 7 est une vue en coupe axiale de l'organe de mise en communication du réservoir et de l'enceinte;
- la figure 8 est une vue en coupe suivant la ligne VIII-VIII de la figure 7;
- la figure 9 est une vue en coupe axiale d'un autre mode de réalisation du dispositif comportant une jauge de liquide;
- la figure 10 est une vue en coupe axiale d'un autre mode de réalisation du dispositif comportant un conduit d'aspiration muni d'un flotteur;
- la figure 11 est une vue schématique montrant l'utilisation du dispositif suivant l'invention dans une installation de chauffage;
- la figure 12 est une vue en coupe d'un autre mode de réalisation du dispositif d'aspiration.

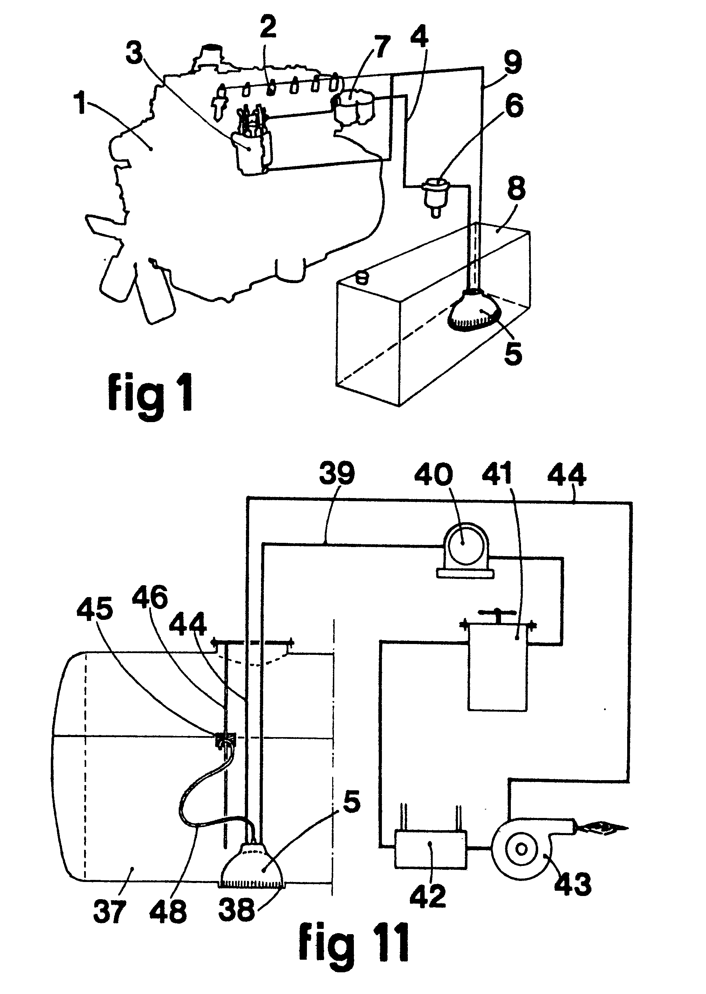

A la figure 1, on a représenté un moteur 1 à combustion interne dont les injecteurs 2 sont alimentés par une pompe d'injection 3 reliée par un conduit 4 au dispositif 5 d'aspiration de combustible suivant l'invention. Sur le conduit 4 sont montés de façon connue une pompe alimentaire 6 et des filtres 7.

Le dispositif d'aspiration 5 qui est monté en crépine d'aspiration noyée dans le réservoir de combustible 8 est relié par un autre conduit 9 au flux de trop-plein de gavage de la pompe d'injection 3 et de retour de fuites des injecteurs 2.

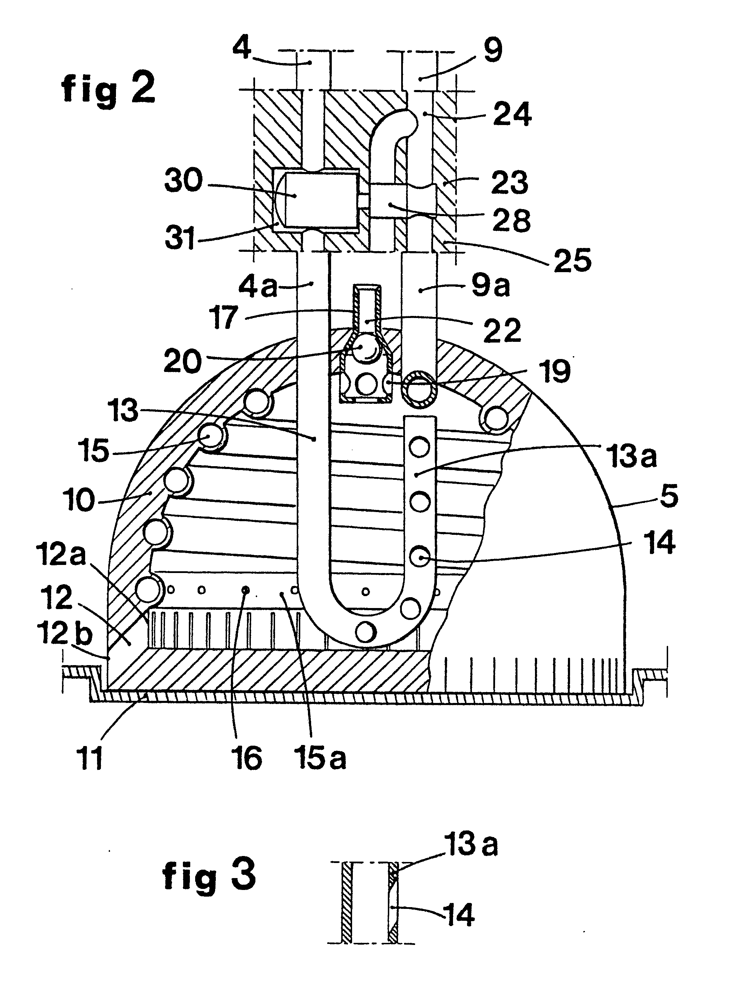

Le dispositif 5 d'aspiration de fluides suivant l'invention représenté à la figure 2 comprend une enceinte 10 en forme de cloche fermée à sa partie inférieure par une cloison et reposant sur une cuvette 11 ménagée dans le fond du réservoir 8 ou rapportée sur le fond dudit réservoir.

Les parois de l'enceinte 10 sont constituées d'un matériau thermiquement isolant et ladite enceinte peut comporter intérieurement des ailettes. L'enceinte 10 comporte à sa partie inférieure et à sa périphérie des lumières directionnels 12 disposées verticalement et orientées tangentiellement (figures 2, 5 et 6), lesdites lumières 12 mettant en communication le réservoir 8 avec l'intérieur de l'enceinte 10 et présentant des orifices 12a débouchant dans l'enceinte qui sont situés à un niveau supérieur aux orifices 12b débouchant dans le réservoir.

A l'intérieur de l'enceinte est disposée une partie d'extrémité 13 du conduit d'aspiration 4 de liquide combustible, ladite partie d'extrémité présentant la forme d'un U dont la branche terminale 13a est recourbée vers la partie haute de l'enceinte. La branche terminale 13a comporte une série d'orifices 14 répartis sur toute sa longueur et dont l'axe est orienté de haut en bas (figure 3) afin de recueillir le liquide le plus haut possible.

Contre la paroi de l'enceinte, à l'intérieur de celle-ci, est disposé un serpentin 15 assurant le réchauffage de l'enceinte 10 et relié au conduit 9 retour de fluide chaud en provenance de la pompe d'injection 3 et des injecteurs 2.

A la base 15a du serpentin, il est prévu une série de trous directionnels 16 calibrés créant un flux giratoire de fluide dans l'enceinte et hors de l'enceinte.

A la partie supérieure de l'enceinte 10 est monté un organe de mise en communication de l'enceinte avec le réservoir, ledit organe étant constitué d'un corps creux 17 (figures 2, 7, 8) présentant à sa partie inférieure un orifice 18 débouchant dans l'enceinte 10 et, à sa périphérie, des lumières directionnelles 19 orientées tangentiellement afin de créer un flux tournant dans l'enceinte 10.

A l'intérieur du corps creux 17 est monté librement un flotteur sphérique 20 qui est susceptible de se déplacer verticalement pour venir, en appui contre un siège 21, obturer l'orifice d'une cheminée 22 prévue à la partie supérieure du corps creux et débouchant dans le réservoir 8.

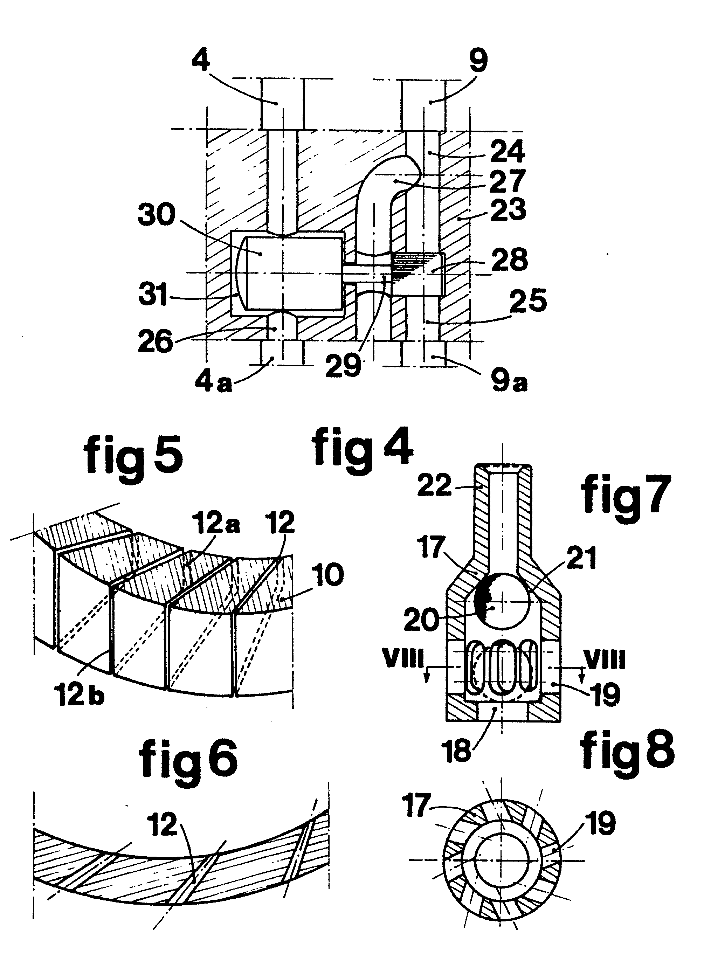

Entre l'enceinte 10 et la pompe alimentaire 6 est disposé un régulateur de réchauffage 23 (figures 2 et 4) qui est monté sur les conduits d'aspiration 4 et de retour de fluide chaud 9, Ce régulateur comporte un conduit d'arrivée de fluide combustible 24, une sortie de fluide combustible 25 vers le serpentin 15, un conduit de départ de fluide combustible 26 en provenance de la partie d'extrémité 13 pour l'aspiration de liquide et un conduit 27 relié au conduit d'arrivée 24 de combustible et débouchant dans le réservoir 8.

Un tiroir 28 relié par une tige 29 à un organe thermosensible 30 peut abturer sélectivement les orifices de passage des conduits 24 et 27. Sur le passage du conduit 26, il est prévu un logement 31 dans lequel est disposé l'organe thermosensible 30. Le dispositif suivant l'invention fonctionne de la manière suivante.

L'enceinte 10 étant noyée dans le réservoir 8, le combustible liquide ainsi contenu dans ladite enceinte est isolé du reste du liquide se trouvant dans le réservoir lorsque le flotteur sphérique 20 obture l'orifice de la cheminée 22.

La température du réservoir étant progressivement abaissée, comme cela se produit en hiver après un certain temps d'immobilisation du véhicule, les cristaux de paraffine contenus dans le combustible liquide tendent à s'agglomérer dans la partie basse du réservoir, même si ceux-ci ont subi un traitement au moyen d'additifs chimiques.

L'inertie thermique de la masse globale de combustible liquide assurant un déséquilibre dans la fonction des cristaux de paraffine, notamment dans la partie centrale du réservoir, l'appareil se trouvant plongé dans cette zone privilégiée seule est protégée de ce phénomène la partie de combustible liquide se trouvant dans l'enceinte 10 du fait d'une différence de tension superficielle au sein du liquide et de l'isolation thermique de l'enveloppe de l'appareil. Au moment du démarrage de la pompe alimentaire 6, du combustible liquide est aspiré par la canalisation 4 et par la partie d'extrémité 13 munie dans sa partie terminale remontante 13a d'orifices d'aspiration 14.

Les cristaux de paraffine etant agglomérés en partie basse du réservoir et obstruant les lumières directionnelles verticales 12 de l'enceinte 10, le combustible non figé de la partie haute du réservoir pénètre dans l'enceinte 10 par l'organe de mise en communication 17, le flotteur sphérique 20 étant abaissé.

Sachant que le retour du trop-plein de gavage de la pompe d'injection 3 a un débit variant peu en fonction de la charge et s'établissant entre 40 et 60% du débit de la pompe alimentaire 6 avec un $\Delta T$ de 25°C, le processus de réchauffage va commencer dans les premières secondes du démarrage du moteur.

Le retour du réservoir 8 s'effectuant par le conduit 9 raccorde au serpentin 15 par le conduit 9a, le combustible liquide réchauffé pénètre dans l'enceinte en traversant les trous directionnels calibrés 16 en créant un mouvement giratoire de lavage et de réchauffage de la partie basse de l'enceinte 10 et de la cuvette 11.

Progressivement, le flux en mouvement provoque la fusion des cristaux de paraffine aspirés avec le combustible liquidé, entraînant le combustible dans un mouvement de rotation accéléré par les lumières directionnelles verticales 12 placées à la base de l'enceinte 10. La conjugaison de ces divers apports de flux tend à faire remonter le combustible liquide à la partie supérieure de l'enceinte créant ainsi des échanges thermiques importants.

Le serpentin 15, en chauffant en même temps les parois de l'enceinte 10, communique ses calories à la masse du combustible se trouvant à l'intérieur directement en contact avec ladite enceinte. Lorsque la libre circulation du combustible à la partie inférieure de l'enceinte 10 permet un remplissage parfait de celle-ci par le bas, le flotteur sphérique 20 vient à nouveau obturer l'orifice de la cheminée 22 préparant ainsi le prochain cycle de refroidissement. La température du combustible à l'entrée de la pompe d'injection 3 ne devant pas dépasser une certaine valeur, le régulateur de température 23 fonctionne de la façon suivante.

Le combustible réchauffé venant de l'enceinte 10 et pénétrant dans le corps du régulateur 23 par le conduit 26 vient en contact acvec l'organe thermosensible 30. Si la température du combustible est trop élevée, l'organe thermosensible 30 agit sur le tiroir 28 obturant le conduit 24 afin de détourner le flux de combustible provenant du conduit 9 vers le conduit 27 débouchant directement dans le réservoir 8 et isolant ainsi l'enceinte 10. La température du combustible diminuant dans l'enceinte 10, il es produit un refroidissement de l'organe thermosensible 30 qui actionne le tiroir 28, de telle sorte que celui-ci revient obturer le conduit 27 et laisse le passage dans le conduit 24 au fluide allant du conduit 9 au conduit 9a relié au serpentin 15, ce régulateur peut être remplacé par une vanne manuelle à trois voies.

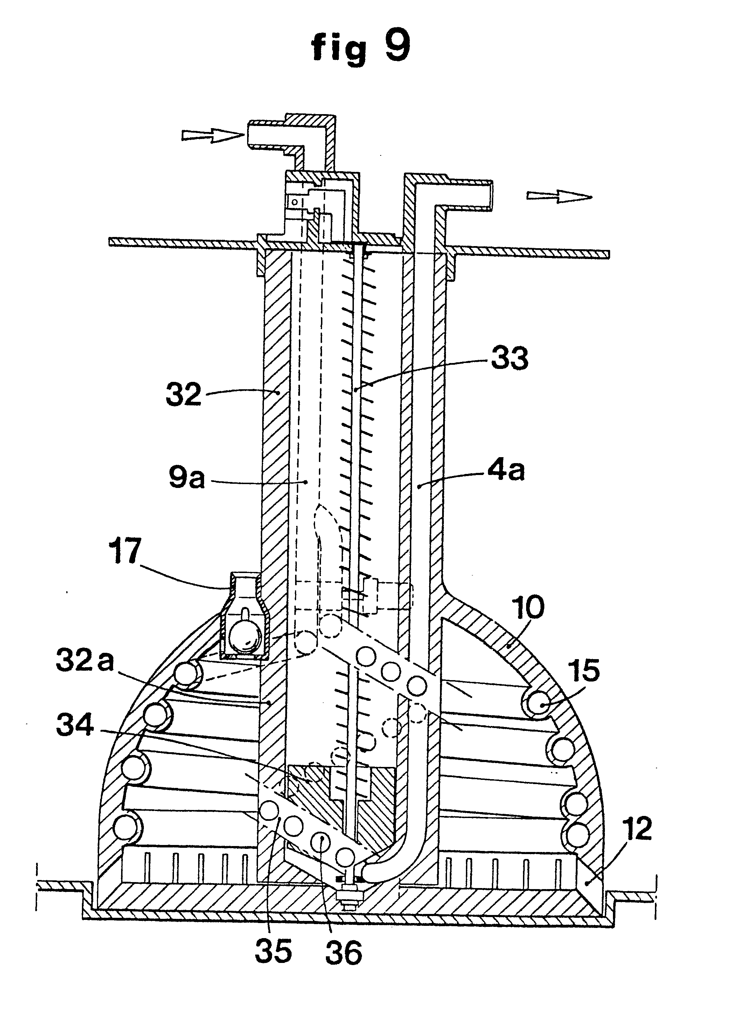

A la figure 9, on a représenté un autre mode de réalisation du dispositif d'aspiration de fluides dans lequel une jauge de niveau de liquide, constituée d'un élément tubulaire 32 s'étendant sur toute la hauteur du réservoir et partiellement à l'intérieur de l'enceinte 10, reçoit intérieurement de façon connue une tige de guidage 33 sur laquelle se déplace de façon connue un flotteur 34. Autour de la partie tubulaire 32a de la jauge est disposé un conduit d'aspiration 35 enroulé hélicoïdalement et relié au conduit d'aspiration 4a du fluide vers la pompe, ledit conduit hélicoïdal 35 s'étendant de bas en haut de l'enceinte présente des orifices 36 répartis sur toute sa longueur. Dans ce mode de réalisation, l'organe 17 de mise en communication de l'enceinte avec le réservoir est disposé latéralement.

A la figure 11, on a représente une autre installation du dispositif 5 dans un circuit d'alimentation en fioul d'une chandière par exemple, ladite installation comportant un réservoir 37 présentant une cuvette 38 conformée dans le fond du réservoir et sur laquelle est disposé le dispositif d'aspiration 5 qui est relié, par un conduit d'aspiration 39 à une pompe alimentaire 40, à un filtre 41, un réchauffeur 42 et à un brûleur 43. Le brûleur 43 est également relié au dispositif d'aspiration 5 par un conduit de retour 44 trop-plein de gavage.

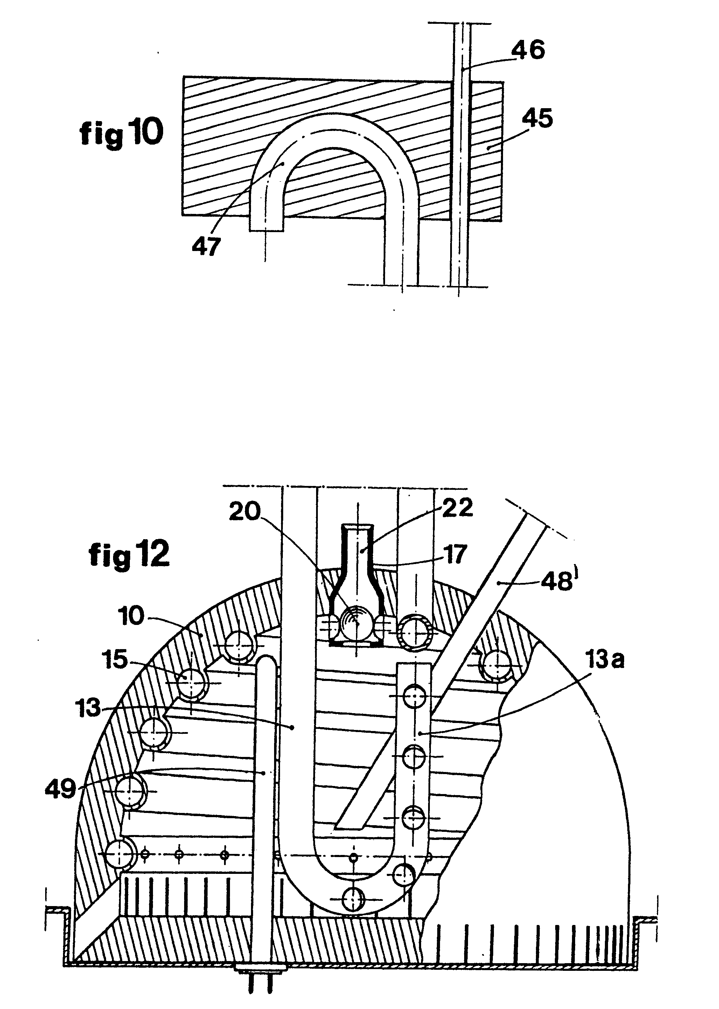

Le dispositif est équipé d'un flotteur 45 guidé par une tige verticale 46 (figures 10, 11) fixée sur le réservoir. Le flotteur 45 porte une tubulure d'aspiration 47 en forme de canne débouchant à proximité de la surface du liquide dans le réservoir, ladite tubulaire étant reliée par un tube souple 48 à la cheminée 22 de l'organe 17 de mise en communication de l'enceinte 10 avec le réservoir. Cette disposition permet de pomper en priorité les fractions légères de combustible se trouvant à la surface du liquide.

Dans ce cas, il n'est pas nécessaire d'utiliser une régulation de chauffage 23, celui-ci étant assuré par le réchauffeur 42. Néanmoins, elle peut présenter des avantages dans le cas où l'industriel souhaite réguler en amont la température de puisage du combustible.

De plus, cette solution offre l'avantage de permettre une fluidification des particules visqueuses contenues dans les produits pétroliers, notamment en pratiquant un brassage permanent au niveau de la crépine d'aspiration, remettant ainsi les particules et l'eau en suspension avant leur pompage. Un agitateur auxiliaire peut être installé pour accélérer encore le brassage dans l'enceinte.

L'adjonction d'un tube 48 sur l'enceinte 10 (figure 12), faisant office de sonde et raccordé à l'extérieur du réservoir à une pompe doseuse ou à toute autre installation, permet d'introduire dans l'enceinte 10 des substances externes, sans avoir à traiter la totalité du réservoir. Ces éléments injectés suivant divers procédés sont ainsi brassés et aspirés immédatement par la pompe alimentaire.

Un échangeur auxiliaire 49 avec régulation thermique peut aussi être installé dans le dispositif pour augmenter le flux de réchauffage, notamment dans les cas difficiles.

Dans le cas où accumulation accidentelle de gaz viendrait à se produire dans l'enceinte 10, l'abaissement du flotteur sphérique 20 permettrait un dégazage immédat de l'enceinte avec évacuation à l'atmosphère par l'intermédiaire de la prise d'air du réservoir, empêchant ainsi un désmaorçage de la pompe alimentaire. Un clapet d'isolement peut être installé sur la partie supérieure de la cheminée 22.

Le dispositif d'aspiration de par sa nature empêchant le déplacement du liquide à l'intérieur de l'enceinte évite l'usage du bac de tranquillisation.

## Revendications

1. Dispositif d'aspiration de liquide, notamment de combustible liquide, disposé dans un réservoir, comprenant une enceinte (10) présentant à sa base une première communication et à sa partie supérieure une deuxième communication avec le réservoir, ladite enceinte (10) renfermant, d'une part, un conduit d'aspiration (13) d'une pompe et, d'autre part, un conduit (15) de retour de liquide excédentaire assurant le réchauffage de l'enceinte caractérisé en ce que l'enceinte (10) repose sur une cuvette (11) au fond du réservoir, que la première communication est formée par des lumières directionnelles verticales (12) situées à la base de ladite enceinte, que la deuxième communication avec le réservoir débouche sous le niveau de liquide dans le réservoir et qu'elle est contrôlée par un flotteur (20) actionné par le liquide dans l'intérieur de l'enceinte, et que le conduit d'aspiration (13) comprend une partie d'extrêmité (13a) qui est recourbée vers la partie haute de l'enceinte et comporte une série d'orifices (14) répartis sur toute sa longueur.

2. Dispositif suivant la revendication 1, caractérisé en ce que la paroi de l'enceinte (10) est constituée d'une matière thermiquement isolante.

3. Dispositif suivant la revendiaction 1, caractérisé en ce que l'enceinte (10) présente la forme d'une cloche fermée à sa partie inférieure par un fond.

4. Dispositif suivant la revendication 1, caractérisé en ce que le conduit de retour de fluide assurant le réchauffage de l'enceinte est constitué de conduits s'étendant de la partie supérieure à la partie inférieure au moins partiellement et montés sur la paroi inférieure de l'enceinte (10) et présentant à leur base une série de trous directionnels calibrés (15) créant un flux giratoire dans l'enceinte (10).

5. Dispositif suivant la revendication 1, caractérisé en ce que l'organe susceptible de mettre en communication la partie supérieure de l'enceinte (10) avec le réservoir (8) est constitué d'un corps creux 17 présentant à sa base des ouvertures (18, 19) débouchant dans l'enceinte (10) ainsi qu'une ouverture (22) à sa partie supérieure débouchant dans le réservoir (8) et susceptible d'être obturée par le flotteur (20) disposé dans le corps creux (17).

6. Dispositif suivant la revendication 5, carctérisé en ce que le corps creux (17) renfermant le flotteur (20) présente à sa base des lumières directionnelles (19) orientées tangentiellement afin de créer un flux tournant dans l'enceinte (10).

7. Dispositif suivant la revendication 1, caractérisé en ce que les lumières verticales directionnelles (12) sont orientées tangentiellement et que l'orifice (12a) débouchant dans l'enceinte (10) est situé à un niveau supérieur à l'orifice (12b) débouchant dans le réservoir (8).

8. Dispositif suivant la revendication 1, caractérisé en ce que l'organe (17) de mise en communication du réservoir avec l'enceinte est relié par un conduit souple (48) à une tubulure (47) d'aspiration de liquide au niveau du liquide dans le réservoir, ladite tubulure d'aspiration en forme de U étant soutenue par un flotteur (45) guidé dans le réservoir.

9. Dispositif suivant la revendication 1, caractérisé en ce que l'enceinte (10) est munie d'un tube latéral (48) de sonde, raccordé à l'extérieur du réservoir par l'injection de substances diverses.

10. Dispositif suivant la revendication 1, caractérisé en ce que l'enceinte (10) est munie intérieurement d'aillettes de transmission de chaleur.

11. Dispositif suivant la revendication 1, caractérisé en ce que l'enceinte (10) comporte intérieurement dans sa partie centrale un prolongement (32a) d'un élément tubulaire (32) recevant une jauge (33, 34) de liquide du réservoir et le conduit d'aspiration (35) est enroulé hélicoïdalement dudit prolongement (32a) de l'élément tubulaire, ledit conduit (35) présentant des orifices (36) sur toute sa longueur.

12. Dispositif suivant la revendication 1, caractérisé en ce que le dispositif comporte un régulateur de chauffage (23) dirigeant sélectivement le fluide de réchauffage à l'intérieur de l'enceinte (10) et dans le réservoir (8) en fonction de la température du fluide aspiré dans ladite enceinte (10).

13. Dispositif suivant la revendication 5, caractérisé en ce que l'organe de mise en communication de l'enceinte avec le réservoir est situé latéralement.

14. Dispositif suivant la revendication 1, caractérisé en ce que dans l'enceinte (10) est disposé un échangeur de température auxiliaire (49) asservi par régulation électrique.

**Patentansprüche**

1. Vorrichtung zum Ansaugen von Flüssigkeit, insbesondere von flüssigem Kraftstoff, die in einem Vorratsbehälter angeordnet ist, mit einem Gehäuse (10), das an seiner Basis eine erste Verbindung und an seinem Oberteil eine zweite Verbindung mit dem Vorratsbehälter aufweist, wobei das Gehäuse (10) einerseits eine Ansaugleitung (13) einer Pumpe und andererseits eine Rücklaufleitung (15) für überschüssige Flüssigkeit aufweist, die das Erhitzen des Gehäuses gewährleistet, dadurch gekennzeichnet, daß das Gehäuse (10) auf einer Wanne (11) am Boden des Vorratsbehälters ruht, daß die erste Verbindung durch gerichtete senkrechte Kanäle (12) an der Basis des Gehäuses gebildet ist, daß die zweite Verbindung mit dem Vorratsbehälter unter dem Flüssigkeitsniveau im Vorratsbehälter mündet und von einem Schwimmer (20) gesteuert wird, der von der Flüssigkeit im Innern des Gehäuses betätigt wird, und daß die Ansaugleitung (13) ein Endteil (13a) hat, das zum Oberteil des Gehäuses umgebogen ist und eine Reihe von auf seiner gesamten Länge verteilten Öffnungen (14) aufweist.

2. Vorrichtung nach Anspruch 1, dadurch gekennzeichnet, daß die Wand des Gehäuses (10) aus einem wärmeisolierenden Material besteht.

3. Vorrichtung nach Anspruch 1 dadurch gekennzeichnet, daß das Gehäuse (10) die Form einer Glocke hat, die an ihrem Unterteil durch einen Boden verschlossen ist.

4. Vorrichtung nach Anspruch 1, dadurch gekennzeichnet, daß die das Erhitzen des Gehäuses gewährleistende Fluidrücklaufleitung aus Leitungen besteht, die sich vom Oberteil zum Unterteil wenigstens teilweise erstrecken und auf der unteren Wand des Gehäuses (10) angebracht sind und an ihrer Basis eine Reihe von kalibrierten gerichteten Löchern (15) aufweisen, die im Gehäuse (10) eine Wirbelströmung erzeugen.

5. Vorrichtung nach Anspruch 1, dadurch gekennzeichnet, daß das Organ, das das Oberteil des Gehäuses (10) mit dem Vorratsbehälter (8) in Verbindung setzen kann, aus einem Hohlkörper (17) besteht, der folgendes aufweist: an seiner Basis Öffnungen (18, 19), die in das Gehäuse (10) münden, und an seinem Oberteil eine Öffnung (22), die in den Vorratsbehälter (8) mündet und von dem im Hohlkörper (17) angeordneten Schwimmer (20) geschlossen werden kann.

6. Vorrichtung nach Anspruch 5, dadurch gekennzeichnet, daß der den Schwimmer (20) umschließende Hohlkörper (17) an seiner Basis gerichtete Kanäle (19) aufweist, die tangential ausgerichtet sind, um im Gehäuse (10) eine sich drehende Strömung zu erzeugen.

7. Vorrichtung nach Anspruch 1, dadurch gekennzeichnet, daß die senkrecht gerichteten Kanäle (12) tangential ausgerichtet sind und daß die in das Gehäuse (10) mündende Öffnung (12a) sich auf einem Niveau befindet, das höher als die in den Vorratsbehälter (8) mündende Öffnung (12b) gelegen ist.

8. Vorrichtung nach Anspruch 1, dadurch gekennzeichnet, daß das Organ (17) zum Verbinden des Vorratsbehälters mit dem Gehäuse durch eine biegsame Leitung (48) mit einem Rohr (47) zum Ansaugen von Flüssigkeit auf dem Niveau der Flüssigkeit im Behälter verbunden ist, wobei das U-förmige Ansaugrohr durch einen im Vorratsbehälter geführten Schwimmer gehalten ist.

9. Vorrichtung nach Anspruch 1, dadurch gekennzeichnet, daß das Gehäuse (10) mit einem seitlichen Sondenrohr (48) versehen ist zum Einspritzen von verschiedenen Substanzen.

10. Vorrichtung nach Anspruch 1, dadurch gekennzeichnet, daß das Gehäuse (10) innen mit Wärmeübertragungsrippen versehen ist.

11. Vorrichtung nach Anspruch 1, dadurch gekennzeichnet, daß das Gehäuse (10) innen in seinem Mittelteil eine Verlängerung (32a) eines rohrförmigen Elements (32) aufweist, das einen Füllstandsmesser (33, 34) für die Flüssigkeit des Vorratsbehälters aufnimmt und daß die Ansaugleitung (35) schraubenförmig um die Verlängerung (32a) des rohrförmigen Elements gewickelt ist, wobei die Leitung (35) auf ihrer gesamten Länge Öffnungen (36) aufweist.

12. Vorrichtung nach Anspruch 1, dadurch gekennzeichnet, daß die Vorrichtung einen Heizregler (23) aufweist, der selektiv die Heizflüssigkeit in das Gehäuse (10) und in den Vorratsbehälter (8) in Abhängigkeit von der Temperatur des in das Gehäuse (10) gesaugten Fluids leitet.

13. Vorrichtung nach Anspruch 5, dadurch gekennzeichnet, daß das Organ zur Verbindung des Gehäuses mit dem Vorratsbehälter seitlich angeordnet ist.

14. Vorrichtung nach Anspruch 1, dadurch gekennzeichnet, daß im Gehäuse (10) ein Hilfswärmetauscher (49) angeordnet ist, der durch elektrische Regelung betrieben wird.

## Claims

1. Liquid induction device, particularly liquid fuel, placed in a tank, comprising an enclosure (10) provided at its base with first communication means and in its upper part with second communication means with the tank, said enclosure (10) comprising on the one hand, an induction pipe (13) of a pump, and on the other hand, a return pipe (15) for the surplus liquid ensuring heating of the enclosure, characterized in that the enclosure (10) rests on a basin (11) at the bottom of the tank, in that said first communication means are formed by vertical directional slots (12) situated at the bottom of said enclosure, in that second communication means with the tank issue under the level of liquid in the tank, and in that it is controlled by a float (20) actuated by the liquid inside the enclosure, in that the induction pipe (13) comprises an end part (13a) which is bent towards the upper part of the enclosure and comprisis a series of orifices (14) distributed on its whole length.

2. Device according to claim 1, characterized in that the wall of the enclosure (10) is constituted by a heat insulating material.

3. Device according to claim 1, characterized in that the enclosure (10) is bell shaped and closed at its lower part by a bottom.

4. Device according to claim 1, characterized in that the fluid return pipe for the fluid ensuring the heating of the enclosure is constituted by pipes extending at least partially from the upper part towards the lower part and mounted on the lower wall of the enclosure (10) and provided at the base thereof with a series of calibrated directional holes (15) creating a gyratory flux inside the enclosure (10).

5. Device according to claim 1, characterized in that the member adapted to cause the upper part of the enclosure (10) to communicate with the tank (8) is constituted by a hollow body (17) having at its base openings (18, 19) issuing into the enclosure (10) as well as an opening (22) in its upper part issuing into the tank (8) and adapted to be closed by the float (20) placed in the hollow body (17).

6. Device according to claim 5, characterized in that the hollow body (17) containing the float (20) has at its base directional slots (19) oriented tangentially in order to create a flux revolving inside the enclosure (10).

7. Device according to claim 1, characterized in that the directional vertical slots (12) are oriented tangentially, and in that the orifice (12a) issuing into the enclosure (10) is situated at a level higher than the orifice (12b) issuing into the tank (8).

8. Device according to claim 1, characterized in that the member (17) causing the tank to communicate with the enclosure is connected via a flexible pipe (48) to a liquid induction pipe at the level of the liquid in the tank, said U shaped induction pipe being supported by a float (45) guided inside the tank.

9. Device according to claim 1, characterized in that the enclosure (10) is provided with a lateral probe tube (48), connected outside of the tank for injecting various substances.

10. Device according to claim 1, characterized in that the enclosure (10) is provided internally with heat transmission blades.

11. Device according to claim 1, characterized in that the enclosure (10) comprises internally in its central part an extension (32a) of a tubular element (32) receiving a gauge (33, 34) for the liquid in the tank and the induction pipe (35) is wound helically around said extension (32a) of the tubular element, said pipe (35) having orifices (36) over its whole length.

12. Device according to claim 1, characterized in that the device comprises a heating regulator (23) directing selectively the heating fluid into the enclosure (10) and into the tank (8) according to the temperature of the fluid sucked into said enclosure (10).

13. Device according to claim 5, characterized in that the member for causing the enclosure to communicate with the tank is situated laterally.

14. Device according to claim 1, characterized in that in the enclosure (10) is placed an auxiliary temperature exchanger (49) controlled by electric regulation.

**fig 1**

**fig 11**

fig 2

fig 3

0 085 590

fig 4

fig 5

fig 6

fig 7

fig 8

13

# fig 9

**fig 10**

46

45

47

**fig 12**

20

22

17

48

10

15

13

49

13a